# EUROPEAN PATENT SPECIFICATION

(11) **EP 2 495 129 B1**
(45) Date of publication and mention of the grant of the patent: **21.06.2017**
(21) Application number: 12157784.5
(22) Date of filing: 01.03.2012
(51) Int. Cl.: B60Q 1/14, B60Q 1/12

(54) **Light distribution control device**
Vorrichtung zur Steuerung der Lichtstreuung
Dispositif de contrôle de distribution d'éclairage

(30) Priority: 04.03.2011 JP 2011047134
(43) Date of publication of application: 05.09.2012
(73) Proprietor: Koito Manufacturing Co., Ltd., Tokyo 108-8711 (JP)
(72) Inventor: Yamazaki, Masashi, Shizuoka-shi, Shizuoka (JP); Toda, Atsushi, Shizuoka-shi, Shizuoka (JP)
(74) Representative: Gill Jennings & Every LLP

(56) References cited:
- EP-A2- 2 272 714
- EP-A2- 2 279 908
- DE-A1-102009 023 093
- DE-A1-102009 024 129

## Description

### BACKGROUND

### Technical Field

The present disclosure relates to a light distribution control device for controlling the light distribution of the headlamps of a vehicle such as a car. In particular, the present disclosure relates to a light distribution control device which controls the light distribution so as to follow a front vehicle (i.e., a vehicle located in an area in front of the self vehicle) such as a vehicle ahead or an oncoming vehicle.

### Related Art

DE 10 2009 024 129 A1 discloses a method for controlling the light distribution of a vehicle headlamp.

Among light distribution control devices which increase the visibility of an area in front of the self vehicle being illuminated by its headlamps without glaring the driver of a vehicle ahead or an oncoming vehicle that is located in the area in front of the self vehicle is one that employs ADB (adaptive driving beam) control. In the ADB control, in doing illumination with a high-beam light distribution, a front vehicle such as a vehicle ahead or an oncoming vehicle is detected and a region is shielded from the illumination light if the driver of the detected front vehicle located there may be glared by the illumination light, whereby the visibility of an area in front of the self vehicle is increased through illumination of as wide an area as possible in front of the self vehicle without glaring the driver of the front vehicle. For example, in JP-A-2010-957, a vehicle in front of the self vehicle is detected, a light distribution pattern is formed by forming an additional light distribution over the cutoff line of a low-beam light distribution pattern of the headlamps of the self vehicle, and the light distribution cutoff line is controlled variably by swivel-controlling the thus-formed light distribution pattern in the left-right direction so as to follow the detected front vehicle, whereby the visibility of an area in front of the self vehicle is increased without glaring the driver of the front vehicle.

In the above ADB control, when the self vehicle and an oncoming vehicle pass each other or the self vehicle passes a vehicle ahead, cutoff line varying control (light distribution swivel control) may lower the visibility of an area in front of the self vehicle or glare the driver of a front vehicle. For example, when the self vehicle and an oncoming vehicle pass each other on a rightward-curved road, first the oncoming vehicle is detected at a right-side end and then its detected position is moved leftward. Therefore, the light distribution of the self vehicle is swivel-controlled leftward. As the self vehicle is steered rightward after entering the curved road, the detected position of the oncoming vehicle is moved leftward fast and hence leftward swivel control needs to be performed at high speed. If a delay occurs in the swivel control, the driver of the oncoming vehicle may be glared. The same thing applies to a leftward-curved road. An oncoming vehicle is first detected at a left-side end and then its detected position is moved rightward fast as the self vehicle is steered leftward after entering the curved road. If the followability of the swivel control is low, the driver of the oncoming vehicle may be glared. A similar glare problem also occurs for a vehicle ahead on a curved road, that is, the driver of a vehicle ahead may be glared when a delay occurs in the swivel control of the self vehicle running on a curved road.

On the other hand, if the follow-up speed of swivel control is increased to solve the above problem, such a swivel control causes a phenomenon that the light distribution is reciprocated at high speed in the left-right direction every time the self vehicle and an oncoming vehicle pass each other as the self vehicle encounters plural oncoming vehicles sequentially on a straight road. Such a high-speed light distribution swivel control may annoy the driver of the self vehicle. A similar problem also occurs in connection with a vehicle ahead on a straight road. High-speed swivel control which is performed as the interval between the self vehicle and a vehicle ahead varies may be annoying to the driver of the self vehicle. In particular, it occurs frequently that the self vehicle encounters plural oncoming vehicles at very short intervals on a straight road. In such a situation, the light distribution switching cycle or the swivel control reciprocation cycle is short and hence the driver is more prone to feel annoying. This may obstruct safe driving because the driver may lose concentration. These problems are not limited to the case of swivel control and likewise arise when, for example, the light distribution pattern is switched between a high-beam pattern and a low-beam pattern so as to follow a front vehicle.

### SUMMARY OF THE INVENTION

One of illustrative aspects of the present invention is to provide a light distribution control device which can prevent glare of the driver of a front vehicle due to a delay of light distribution follow-up control and prevent the driver of the self vehicle from being annoyed by frequent light distribution controls.

According to one or more illustrative aspects of the present invention, there is provided a light distribution control device (100) for controlling a light distribution pattern which is formed by light emitted from a vehicle headlamp (RHL, LHL) of a vehicle. The device includes: a vehicle detector (101) configured to detect a front vehicle existing in front of the vehicle; a light distribution controller (103) configured to determine the light distribution pattern based on a position of the detected front vehicle so as to prevent the front vehicle from being illuminated with glare light; a swiveling controller (104) configured to control swiveling of the vehicle headlamp; a road determining section (102) configured to determine a road shape of a road in front of the vehicle so as to generate road information; and a responsivity controller (105) configured to set a swiveling control speed of the swiveling controller to a certain speed, based on the road information.

According to the present invention, the speed of controlling the light distribution according to a variation in vehicle position is set high for a curved road. As a result, a proper light distribution can be maintained for a front vehicle even on a curved road on which the position of the front vehicle relative to the self vehicle varies fast, whereby the driver of the front vehicle is prevented reliably from being glared and the visibility can be increased by securing a wide illumination area in front of the self vehicle. On a straight road, since the light distribution control speed is set low, the frequency of light distribution switching is lowered, whereby the driver of the self vehicle is prevented from being annoyed.

According to the present invention, the speed of switching the light distribution patterns of the respective headlamps or performing a swivel control according to a variation in vehicle position is set high for a curved road, whereby the driver of a front vehicle is prevented reliably from being glared and the visibility can be increased by securing a wide illumination area in front of the self vehicle. On a straight road, since the light distribution pattern switching speed or the swivel control speed is set low, the frequency of light distribution switching is lowered, whereby the driver of the self vehicle is prevented from being annoyed. Furthermore, in the invention, the means for follow-up-controlling the light distribution is means for controlling a shielded region as part of the light distribution so as to follow a front vehicle. As a result, the driver of the front vehicle is prevented from being glared and high visibility is secured in an area in front of the self vehicle on either of a straight road and a curved road.

### BRIEF DESCRIPTION OF THE DRAWINGS

Fig. 1 is a conceptual diagram showing the configuration of a light distribution control device according to an embodiment of the present invention;
Fig. 2 shows the configuration of a headlamp used in the embodiment;
Fig. 3 illustrates a list of light distribution patterns formed by a left headlamp and a right headlamp;
Figs. 4A and 4B show example responsivity characteristics;
Fig. 5 is a flowchart of a light distribution control process according to the embodiment;
Figs. 6A-6C are schematic diagrams showing an example light distribution control for a front vehicle running on a straight road; and
Figs. 7A-7C are schematic diagrams showing an example light distribution control for a front vehicle running on a curved road.

### DETAILED DESCRIPTION

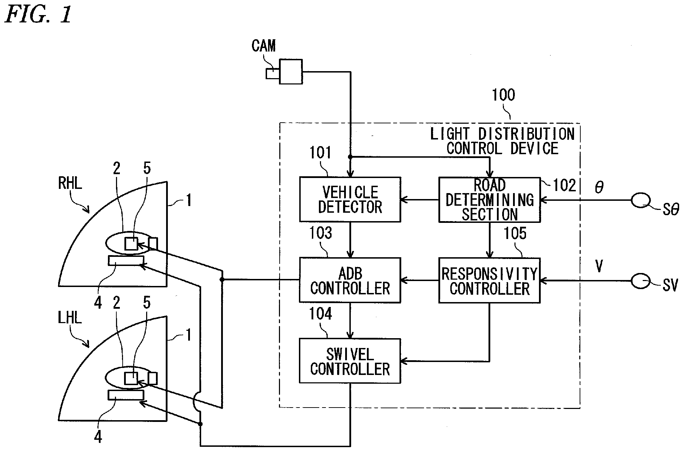

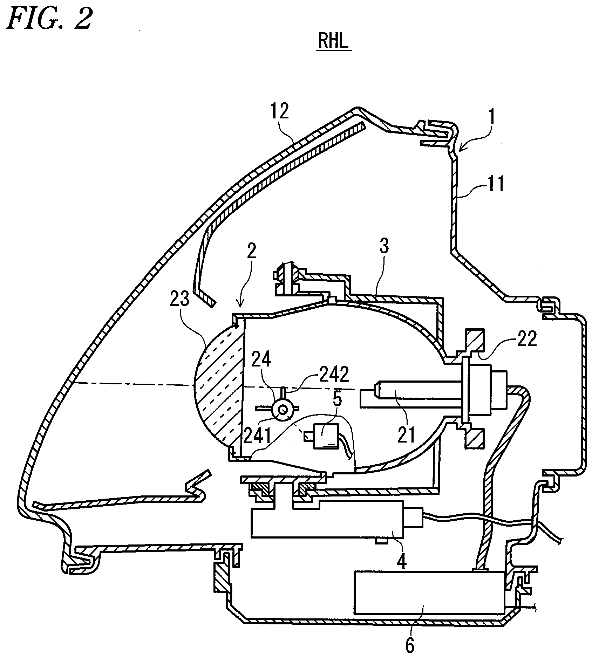

An embodiment of the present invention will be hereinafter described with reference to the drawings. Fig. 1 is a conceptual diagram showing the configuration of a light distribution control device in the headlamps of a car. The front portion of a car is provided with a left headlamp LHL and a right headlamp RHL, and the light distribution of each of the headlamps LHL and RHL is controlled by the light distribution control device 100. The headlamps LHL and RHL have basically the same configuration. For example, as shown in Fig. 2, in the right headlamp RHL, a projector-type lamp unit 2 is incorporated in a lamp housing 1 which is composed of a lamp body 11 and a transparent front cover 12. Although not described in detail, the lamp unit 2 is equipped with a light source 21 which is a discharge bulb, a spheroidal reflector 22, a projection lens 23 disposed in front of the reflector 22, and a variable shade 24 for forming a light distribution pattern of light that is projected by the projection lens 23. The lamp unit 2 is supported by a bracket 3 which is disposed in the lamp housing 1, and is configured so as to be swivel-controlled in the left-right direction by a swivel actuator 4, that is, so that its illumination direction can be deflected in the left-right direction. The variable shade 24 is configured in such a manner that plural light shield plates 242 having different shapes are attached to the circumferential surface of a cylindrical main shaft 241. The rotational position of the variable shade 24 around the axis is varied by a shade actuator 5. The light shield plate 242 located on the lamp optical axis is switched by varying the rotational position of the variable shade 24, whereby the light distribution pattern of light projected by the lamp unit 2 is varied. The discharge bulb 21 is electrically connected to a discharge circuit unit 6 and is lit by it.

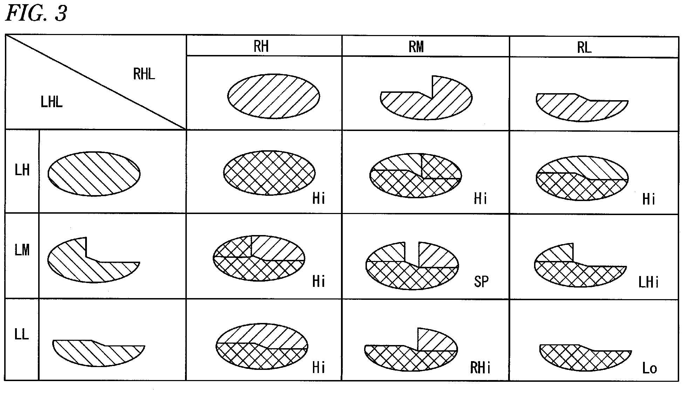

Fig. 3 shows light distribution patterns of each of the left headlamp LHL and the right headlamp RHL which are formed by controlling the variable shade 24 and total light distribution patterns each of which is formed by superimposing light distribution patterns of the two headlamps LHL and RHL on each other. The light distribution patterns formed by the right headlamp RHL (see the top row of Fig. 3) are as follows. When the variable shade 24 is located at a first rotational position, a high-beam light distribution pattern RH having no cutoff line is formed. When the variable shade 24 is located at a third rotational position, a low-beam light distribution pattern RL having a cutoff line is formed. When the variable shade 24 is located at a second rotational position, a light distribution pattern RM (called a right-side high-beam light distribution pattern) is formed whose right-side pattern is a partial high-beam light distribution pattern and left-side pattern is a partial low-beam light distribution pattern. As for the left headlamp LHL, as shown in the leftmost column of Fig. 3, a high-beam light distribution pattern LH, a low-beam light distribution pattern LL, and a left-side high-beam light distribution pattern LM are likewise formed when the variable shade 24 is located at the respective rotational positions. As shown in Fig. 3, when light distribution patterns of the two headlamps LHL and RHL are superimposed on each other, a high-beam light distribution pattern Hi, a low-beam light distribution pattern Lo, a right-side high-beam light distribution pattern RHi, a left-side high-beam light distribution pattern LHi, or a split light distribution pattern SP is formed as a total light distribution pattern. The split light distribution pattern SP which has a central recessed non-illumination region is formed when the right-side high-beam light distribution pattern RM and the left-side high-beam light distribution pattern LM are superimposed on each other. Plural high-beam light distribution patterns Hi having different luminance distributions are formed when different sets of light distribution patterns of the left headlamp LHL and the right headlamp RHL are superimposed on each other.

Again referring to Fig. 1, the light distribution control device 100 is equipped with a vehicle detector 101 for detecting a vehicle type and a position of a front vehicle (i.e., another vehicle existing on a road ahead) and a road determining section 102 for detecting a road ahead on which the self vehicle is to run and outputting road information indicating a result of a determination as to whether the detected road is a straight road or a curved road. The light distribution control device 100 is also equipped with an ADB controller 103 for determining light distribution patterns to be formed by the left headlamp LHL and the right headlamp RHL of the self vehicle based on the detected vehicle position and controlling the lamp units 2 so that the determined light distribution patterns are formed, and a swivel controller 104 for determining optical axis directions (illumination directions) of the left headlamp LHL and the right headlamp RHL of the self vehicle based on the detected vehicle position and driving the swivel actuators 4 on the determined illumination directions. The light distribution control device 100 is further equipped with a responsivity controller 105 for variably controlling the light distribution pattern switching of the ADB controller 103 and the swivel control speed of the swivel controller 104 based on the road information that is output from the road determining section 102.

A camera CAM for shooting an area in front of the self vehicle is connected to the vehicle detector 101 and the road determining section 102. The vehicle detector 101 detects the position of a front vehicle based on an image taken by the camera CAM There are various methods for detecting the position of a front vehicle. For example, positions of lit lamps (e.g., headlamps or tail lamps) provided at the left end and the right end of a vehicle, the left end position and the right end position of a vehicle, the center of positions of left and right lit lamps or the left and right end positions of a vehicle, or the like are or is detected as a vehicle position. In the embodiment, the vehicle detector 101 detects whether a front vehicle is a vehicle ahead or an oncoming vehicle. For example, the vehicle detector 101 determines that a front vehicle is a vehicle ahead if the color of its lit lamps is red or a color similar to red, and determines that a front vehicle is an oncoming vehicle if the color of its lit lamps is white or a color similar to white.

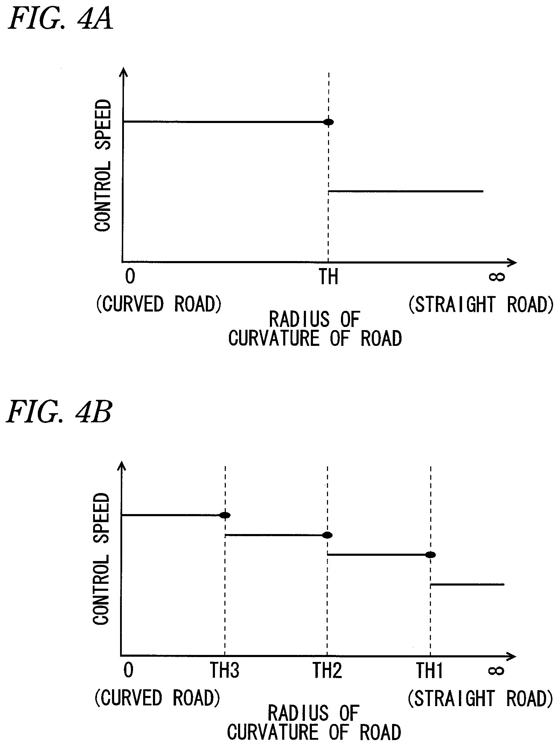

The road determining section 102 detects a road in front of the self vehicle by analyzing an image captured by the camera CAM, determines whether the detected road is a straight road or a curved road, and outputs a determination result as road information. For example, although not described in detail, the road determining section 102 recognizes a shape of a road ahead through image analysis, calculates a radius of curvature, in a flat plane, of the recognized road, and detects whether the road ahead is a straight road or a curved road by applying the calculated radius of curvature to a preset determination map, that is, comparing the calculated radius of curvature with a reference value TH (see Fig. 4A) that is set in the determination map. In this case, naturally it is also detected as part of road information whether the road ahead is a rightward curve or a leftward curve. As described later, different reference values may be set in a determination map so that plural curved sections of a curved road are detected. Furthermore, the reference value TH may be given a prescribed width (hysteresis) to enable stable road determination.

In the embodiment, a steering angle sensor Sθ for detecting a steering angle θ of the self vehicle is connected to the road determining section 102. The road determining section 102 can detect whether the self vehicle is running on a straight road or a curved road based on the steering angle θ detected by the steering angle sensor Sθ. Furthermore, instead of judging whether a road ahead is a straight road or a curved road based on an image taken by the camera CAM, the road determining section 102 may be configured so as to calculate a radius of curvature of the road ahead based on information obtained from a navigation device or road information obtained from a traffic system and make such a determination based on the calculated radius of curvature.

The ADB controller 103 can switch between the light distribution patterns RH, RL, and RM of the right headlamp RHL and between the light distribution patterns LH, LL, LM of the left headlamp LHL (see Fig. 3) by independently controlling the shade actuators 5 of the variable shades 24 of the right headlamp RHL and the left head lamp LHL based on a vehicle position detected by the vehicle detector 101. The ADB controller 103 switches between the light distribution patterns taking into consideration a vehicle type that is detected by the vehicle detector 101. Thus, the total light distribution pattern of the two headlamps LHL and RHL can be controlled so as to become one of the high-beam light distribution patterns Hi, the low-beam light distribution pattern Lo, the right-side high-beam light distribution pattern RHi, the left-side high-beam light distribution pattern LHi, and the split light distribution pattern SP as a result of superimposition of selected light distribution patterns of the two headlamps LHL and RHL.

The swivel controller 104 swivel-controls the lamp units 2 of the headlamps LHL and RHL in the left-right direction by receiving information of a vehicle position detected by the vehicle detector 101 via the ADB controller 103 and driving the swivel actuators 4 of the headlamps LHL and RHL so as to follow the vehicle position. That is, the swivel controller 104 performs swivel control in the left-right direction so as to establish a prescribed positional relationship between the center of the light distribution pattern set by the ADB controller 103 (i.e., illumination optical axis direction) and the front vehicle. In particular, in the swivel control, the optical axis direction can be controlled so that the vertical cutoff line of each of the right-side high-beam light distribution pattern RM of the right headlamp RHL and the left-side high-beam light distribution pattern LM of the left headlamp LHL does not overlap with a front vehicle.

The responsivity controller 105 switches the responsivity to a variation in vehicle position, that is, the light distribution pattern switching speed and/or the swivel control speed, depending on road information that is output from the road determining section 102 which indicates whether a road ahead is a straight road or a curved road. Fig. 4A is a control speed characteristic diagram used in the responsivity controller 105. The light distribution switching speed for a curved road is set higher than for a straight road. A reference value TH (radius of curvature) shown in Fig. 4A is the same as the reference value used in the road determining section 102; a straight road or a curved road are discriminated from each other the control speed is changed using the reference value TH as a threshold value. In the case of the swivel control speed, the swivel control speed is set higher for a curved road than for a straight road. That is, the illumination optical axis direction is controlled so as to follow a variation in vehicle position faster for a curved road than for a straight road. The responsivity controller 105 can be configured so as to switch the responsivity taking into consideration a vehicle speed V that is detected by a vehicle speed sensor SV of the self vehicle. It is preferable that the responsivity characteristic shown in Fig. 4A be set by measuring proper control speeds in advance assuming various running situations such as different vehicle speeds of the self vehicle.

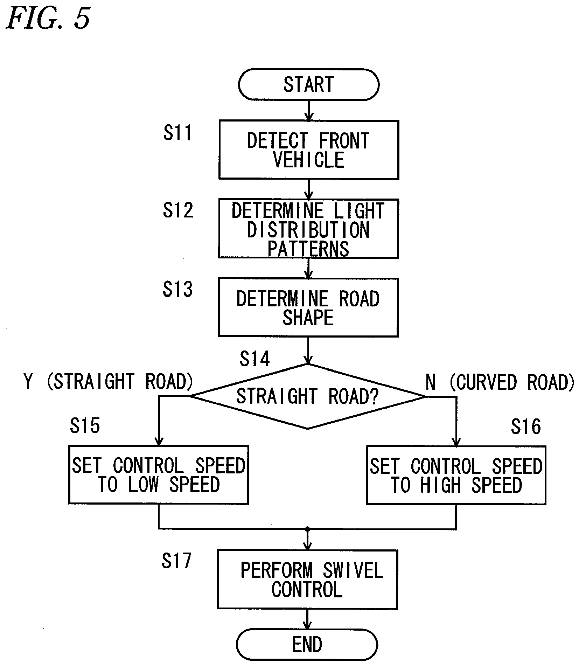

How the above-configured light distribution control device 100 according to the embodiment operates will be described below. Fig. 5 is a flowchart of a light distribution control process. At step S11, the vehicle detector 101 detects a vehicle running ahead based on an image signal produced by the camera CAM and detects a position of the detected vehicle. The vehicle detector 101 outputs information of the detected vehicle position to the ADB controller 103. At step S12, the ADB controller 103 controls the light distribution patterns of the left headlamp LHL and the right headlamp RHL based on the detected vehicle position. For example, if the detected vehicle position is in the vicinity of the line of the directly forward direction of the self vehicle, the ADB controller 103 sets the light distribution patterns of the left headlamp LHL and the right headlamp RHL to the left-side high-beam light distribution pattern LM and the right-side high-beam light distribution pattern RM, respectively. As a result, the total light distribution patter of the two headlamps LHL and RHL is controlled to the split light distribution pattern SP. If the detected vehicle position is deviated leftward or rightward, the ADB controller 103 sets the light distribution pattern of at least one of the left headlamp LHL and the right headlamp RHL to the low-beam light distribution pattern. For example, if the detected vehicle position is deviated leftward, the low-beam light distribution pattern LL is set for the left headlamp LHL while the right-side high-beam light distribution pattern RM continues to be set for the right headlamp RHL or the low-beam light distribution patterns LL and RL are set for the left headlamp LHL and the right headlamp RHL, respectively. As a result, the total light distribution pattern of the two headlamps LHL and RHL is made the right-side high-beam light distribution pattern RHi or the low-beam light distribution pattern Lo, whereby high visibility is secured in a right-side region while the driver of the vehicle located on the left side from being glared. If the detected vehicle position is deviated rightward, it goes without saying that a light distribution control that is left/right-opposite to the above-described one is performed.

At step S13, the road determining section 102 receives the image signal of an area in front of the self vehicle from the camera CAM and detects a road ahead from the image signal. At step S14, the road determining section 102 determines whether the detected road is a straight road or a curved road. More specifically, the road determining section 102 calculates a radius of curvature of the road detected from the image signal and compares the radius of curvature with the reference value TH that is prescribed in the determination map. The road determining section 102 determines that the road is a straight road if the radius of curvature is larger than or equal to the reference value TH, and determines that the road is a curved road if the radius of curvature is smaller than the reference value TH. The road determining section 102 outputs, to the responsivity controller 105, resulting road information which indicates whether the road is a straight road or a curved road.

The responsivity controller 105 switches the light distribution control responsivity, that is, the light distribution pattern switching speed and/or the illumination optical axis swivel control speed, so as to follow the vehicle position based on the road information received from the road determining section 102. If the road is a straight road (S14: yes), at step S15 the responsivity controller 105 switches the control speed to a low speed which is a minimum speed at which the driver of the front vehicle is not glared. On the other hand, if the road is a curved road (S14: no), at step S16 the responsivity controller 105 sets the control speed higher than in the case of a straight road so that the light distribution switching is performed quickly. At step S17, the swivel controller 104 performs a swivel control at a set speed. In the light distribution control process being described, the ADB controller 103 does not perform a control of setting the light distribution pattern switching speed higher for a curved road than for a straight road.

As described above, the ADB controller 103 controls the light distribution patterns of the left headlamp LHL and the right headlamp RHL to proper light distribution patterns according to the position of a front vehicle and the swivel controller 104 controls the illumination direction (i.e., swivel-controls the illumination optical axis) so as to follow a variation in vehicle position. As a result, the visibility of an area in front of the self vehicle can be increased by illuminating a wide area in front of the self vehicle without glaring the driver of the front vehicle. Since the swivel control speed is set higher for a curved road than for a straight road, the driver of a front vehicle is prevented from being glared due to a delay in the control of varying the light distribution cutoff line and the driver of the self vehicle is prevented from being annoyed by light distribution changes.

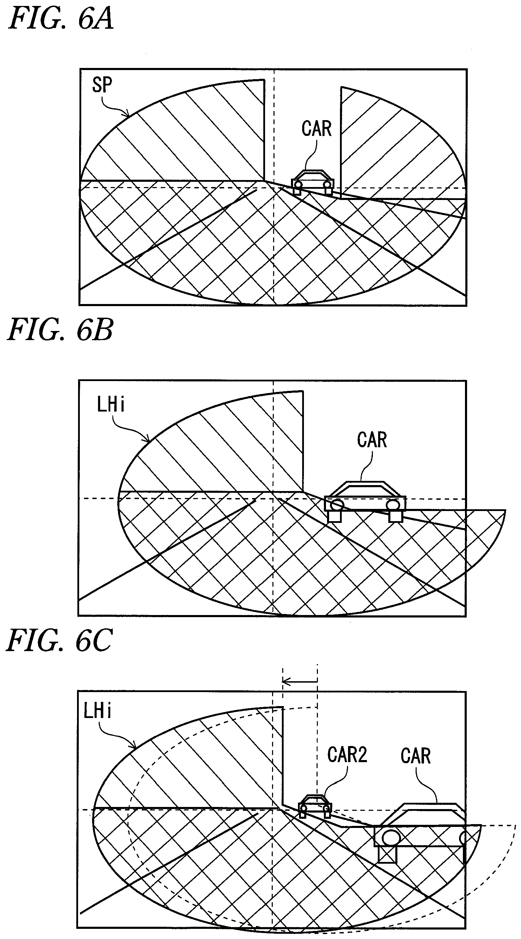

For example, as shown in Fig. 6A, assume that the road determining section 102 has determined that a road ahead is a straight road, the vehicle detector 101 has detected an oncoming vehicle CAR in front of the self vehicle, and the ADB controller 103 has set the total light distribution pattern to the split light distribution pattern SP. In this case, the responsivity controller 105 sets the responsivity to a minimum necessary swivel control speed that prevents the driver of the oncoming vehicle from being glared. When as shown in Fig. 6B the oncoming vehicle CAR has come close to the self vehicle, the light distribution pattern of the left headlamp LHL is switched to the low-beam light distribution pattern LL to set the total light distribution pattern of the two headlamps LHL and RHL to the left-side high-beam light distribution pattern LHi and the two headlamps LHL and RHL are swivel-controlled rightward so as to follow the oncoming vehicle. The rightward swivel control is performed at a low speed. When as shown in Fig. 6C the next oncoming vehicle CAR2 is detected in the vicinity of the line of the directly forward direction of the self vehicle, a swivel control is performed in such a manner that the left-side high-beam light distribution pattern LHi is returned leftward. Since the rightward swivel control with the left-side high-beam light distribution pattern LHi has been performed at the low speed and hence a resulting swivel length is short (indicated by a broken line in Fig. 6C), the movement length of the leftward swivel control for the next oncoming vehicle CAR2 is so short that the driver of the self vehicle is not annoyed.

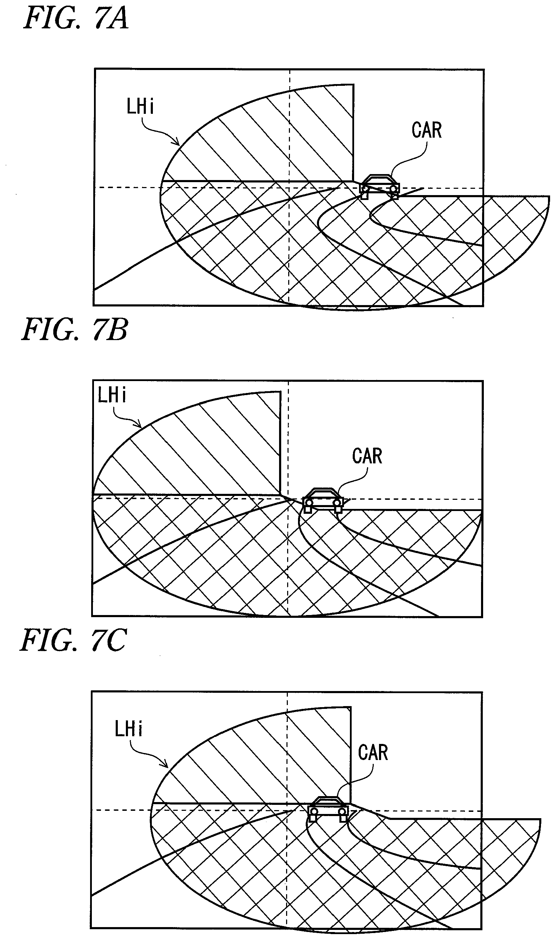

For another example, as shown in Fig. 7A, assume that the road determining section 102 has determined that a road ahead is a curved road (e.g., rightward curved road) and the vehicle detector 101 has detected an oncoming vehicle CAR a little on the right of the line of the directly forward direction of the self vehicle, and the ADB controller 103 has set the total light distribution pattern to the left-side high-beam light distribution pattern LHi. In this case, since the self vehicle is steered rightward as it enters the rightward curved road, the position of the oncoming vehicle CAR is changed leftward rapidly relative to the self vehicle. Since the responsivity controller 105 sets the swivel control speed higher than for a straight road, as shown in Fig. 7B the swivel controller 104 performs a swivel control so that the total light distribution pattern is moved leftward at high speed. This reliably prevents the driver of the oncoming vehicle CAR which is moving leftward rapidly relative to the self vehicle from being glared. If the swivel control speed were set the same as for a straight road, as shown in Fig. 7C a delay would occur in the leftward movement of the left-side high-beam light distribution pattern LHi and the driver of the oncoming vehicle CAR would be glared.

As described above, in the light distribution control device 100 according to the embodiment, the speed of a swivel control to cope with a variation in the position of a front vehicle is set high for a curved road. Therefore, even on a curved road on which the position of the front vehicle relative to the self vehicle is varied fast, a proper light distribution pattern can be maintained for a front vehicle, whereby the driver of the front vehicle is prevented reliably from being glared. On the other hand, the visibility can be increased by illuminating a wide area in front of the self vehicle.

In the embodiment, the position of the cutoff line of the total light distribution pattern is controlled, that is, a swivel control is performed so that the total light distribution pattern is moved in the left-right direction, so as to follow a variation of the position of a front vehicle. However, it is naturally possible to substantially follow-up-controlling the cutoff line of the total light distribution pattern in such a manner that the ADB controller 103 switches the light distribution patterns of the left headlamp LHL and the right headlamp RHL so as to follow a variation of the position of a front vehicle. More specifically, in the case of a straight road, the total light distribution pattern is switched at a minimum necessary speed according to a variation of the position of a front vehicle, whereby frequent switching between light distribution patterns can be prevented and the driver of the self vehicle is prevented from being annoyed. On the other hand, in the case of a curved road, switching between light distribution patterns is performed at high speed, whereby the driver of an oncoming vehicle is prevented reliably from being glared.

In the embodiment, the road determining section 102 recognizes a rod shape by analyzing an image captured by the camera CAM and determines whether the road is a straight road or a curved road based on the recognized road shape. Alternatively, the road determining section 102 may make such a determination based on a steering angle θ that is detected by the steering angle sensor Sθ. On a curved road, the steering wheel is rotated leftward and rightward and the steering angle θ of the self vehicle naturally has a non-zero value. A curved road can be detected by detecting a variation of the steering angle θ. Also in this case, discrimination between a straight road and a curved road can be made by setting a determination map involving steering angles θ in advance and applying a detected steering angle θ to the determination map. As a further alternative, where the self vehicle is equipped with an acceleration sensor (in particular, yaw rate sensor), discrimination between a straight road and a curved road can be made based on an output signal of the yaw rate sensor.

In the embodiment, the road shape is classified into two shapes, that is, a straight road or a curved road, by setting one reference value TH in the determination map which is used for the road shape determination of the road determining section 102. However, as mentioned above, the road shape may be classified into three or more shapes by the radius of curvature of a road by setting plural reference values. The responsivity of the light distribution control is changed stepwise for the three or more road shapes. In the example of Fig. 4B, the road shape is classified into four shapes using three reference values TH1-TH3 (different radii of curvature). The light distribution pattern switching speed and/or the swivel control speed is increased as the radius of curvature decreases.

The responsivity controller 105 may set responsivity, that is, the light distribution pattern switching speed or the swivel control speed, through calculation rather than using a determination map as in the embodiment. For example, the responsivity controller 105 takes in information of a steering angle θ from the steering angle sensor Sθ and calculates responsivity according to a steering angle variation. Since the steering angle θ has a close relationship with the radius of curvature of a road, the responsivity for a curved road can be controlled by calculating it using the steering angle θ as a parameter. For example, although not described in detail, a delay circuit such as a lowpass filter is incorporated in a control circuit of the ADB controller 103 or the swivel controller 104 and the delay coefficient of the delay circuit is set according to the steering angle θ. If the delay circuit is configured so that the delay coefficient decreases as the steering angle θ increases, the delay of each kind of control becomes large for a straight road (the steering angle θ is small) and becomes small for a curved road (the steering angle θ is large). As a result, the light distribution control speed can be set higher for a curved road than for a straight road.

In the invention, the left headlamp LHL and the right headlamp RHL can be swivel-controlled independently. For example, a swivel control method is possible in which when the position of a front vehicle is moved rightward, the left headlamp LHL is not swivel-controlled and only the right headlamp RHL is swivel-controlled according to the position of the front vehicle. Also in this case, by setting the speed of the swivel control of the right headlamp RHL higher for a curved road than for a straight road, the degree of swivel control for a straight road is suppressed to prevent the driver of the self vehicle from being annoyed whereas the driver of a front vehicle running on a curved road is prevented from being glared.

However, in the invention, where light distribution control is performed independently on the left headlamp LHL and the right headlamp RHL, particularly in the case where the light distribution cutoff line is moved substantially so as to follow a front vehicle as in light distribution pattern switching or swivel control, it is preferable to restrict the control of the responsivity controller 105, that is, the control of setting the control speed higher for a curved road, in the following controls (a)-(d). This is to reliably prevent the driver of a front vehicle from being glared and to secure high visibility of an area in front of the self vehicle even when a delay occurs in the vehicle detector 101 in the processing of detecting the position of the front vehicle. The controls (a)-(d) are performed singly or in combination. The controls (c) and (d) are controls to be performed when the road determining section 102 has determined that a road is curved like an S shape.
(a) Inward control on a headlamp that is located on the outside of a curved road.
(b) Outward control on a headlamp that is located on the inside of a curved road.
(c) Swivel control to follow a front vehicle on a headlamp that is located on the outside of a curved road.
(d) Swivel control to follow a front vehicle on headlamps that are located on the inside and the outside of a curved road.

According to the invention, a light distribution control device may control the light distribution cutoff line so as to follow a front vehicle by ADB control, swivel control, and/or the like.

While aspects of embodiments of the present invention have been shown and described above, other implementations are within the scope of the claims. It will be understood by those skilled in the art that various changes in form and details may be made therein without departing from the scope of the invention as defined by the appended claims.

## Claims

1. A light distribution control device (100) for controlling a light distribution pattern which is formed by light emitted from a vehicle headlamp (RHL, LHL) of a vehicle, the device comprising:
a vehicle detector (101) configured to detect a front vehicle existing in front of the vehicle;
a light distribution controller (103) configured to determine the light distribution pattern based on a position of the detected front vehicle so as to prevent the front vehicle from being illuminated with glare light;
a swiveling controller (104) configured to control swiveling of the vehicle headlamp;
a road determining section (102) configured to determine a road shape of a roadin front of the vehicle so as to generate road information; and
a responsivity controller (105) configured to set a swiveling control speed of the swiveling controller (104) to a certain speed, based on the road information,
**characterized in that**:
when the road determining section (102) determines that the road shape is a curved road, the responsivity controller (105) sets the swiveling control speed of the swiveling controller (104) to a first speed, and
when the road determining section (102) determines that the road shape is a straight road, the responsivity controller (105) sets the swiveling control speed of the swiveling controller (104) to a second speed,
wherein the first speed is higher than the second speed.

2. The device (100) of claim 1, wherein the road determining section (102) is configured to determine the road shape based on a curvature radius of the road, and
wherein when the curvature radius of the road is small than a threshold value, the road determining section (102) determines that the road shape is a straight road, and
wherein when the curvature radius of the road is larger than the threshold value, the road determining section (102) determines that the road shape is a curved road.

3. The device (100) of claim 1, wherein the road determining section (102) is configured to determine the road shape, based on a steering angle (θ) obtained from a steering angle sensor (Sθ), and
wherein when the steering angle (θ) is small than a threshold value, the road determining section (102) determines that the road shape is a straight road, and
wherein when the steering angle (θ) is larger than the threshold value, the road determining section (102) determines that the road shape is a curved road.

4. The device (100) of any preceding claim, wherein
a vehicle detector (101) is configured to obtain an image of a front region captured by a camera device and detect the front vehicle based on lamps of the front vehicle in the captured image.

## Patentansprüche

1. Lichtverteilungssteuervorrichtung (100) zum Steuern eines Lichtverteilungsmusters, das durch von einem Fahrzeugscheinwerfer (RHL, LHL) eines Fahrzeugs emittiertes Licht ausgebildet wird, wobei die Vorrichtung umfasst:
einen Fahrzeugdetektor (101), der dazu eingerichtet ist, ein vorderes Fahrzeug zu erfassen, das vor dem Fahrzeug vorhanden ist;
eine Lichtverteilungssteuereinheit (103), die dazu eingerichtet ist, das Lichtverteilungsmuster auf der Grundlage einer Position des erfassten vorderen Fahrzeugs zu bestimmen um zu verhindern, dass das vordere Fahrzeug mit Blendlicht beleuchtet wird;
eine Schwenksteuereinheit (104), die dazu eingerichtet ist, das Schwenken des Fahrzeugscheinwerfers zu steuern;
einen Straßenbestimmungsabschnitt (102), der dazu eingerichtet ist, eine Straßenform einer Straße vor dem Fahrzeug zu bestimmen, um Straßeninformationen zu erzeugen; und
eine Empfindlichkeitssteuereinheit (105), die dazu eingerichtet ist, eine Schwenksteuergeschwindigkeit der Schwenksteuereinheit (104) auf eine bestimmte Geschwindigkeit basierend auf den Straßeninformationen einzustellen,
**dadurch gekennzeichnet, dass**:
wenn der Straßenbestimmungsabschnitt (102) bestimmt, dass die Straßenform eine gekrümmte Straße ist, die Empfindlichkeitssteuereinheit (105) die Schwenksteuergeschwindigkeit der Schwenksteuereinheit (104) auf eine erste Geschwindigkeit setzt und,
wenn der Straßenbestimmungsabschnitt (102) bestimmt, dass die Straßenform eine gerade Straße ist, die Empfindlichkeitssteuereinheit (105) die Schwenksteuergeschwindigkeit der Schwenksteuereinheit (104) auf eine zweite Geschwindigkeit setzt,
wobei die erste Geschwindigkeit höher als die zweite Geschwindigkeit ist.

2. Vorrichtung (100) nach Anspruch 1, bei der der Straßenbestimmungsabschnitt (102) dazu eingerichtet ist, die Straßenform auf der Grundlage eines Krümmungsradius' der Straße zu bestimmen, und,
wenn der Krümmungsradius der Straße kleiner ist als ein Schwellenwert, der Straßenbestimmungsabschnitt (102) bestimmt, dass die Straßenform eine gerade Straße ist, und,
wenn der Krümmungsradius der Straße größer als der Schwellenwert ist, der Straßenbestimmungsabschnitt (102) bestimmt, dass die Straßenform eine gekrümmte Straße ist.

3. Vorrichtung (100) nach Anspruch 1, bei der der Straßenbestimmungsabschnitt (102) dazu eingerichtet ist, die Straßenform auf der Grundlage eines von einem Lenkwinkelsensor (Sθ) ermittelten Lenkwinkels (θ) zu bestimmen und,
wenn der Lenkwinkel (θ) kleiner als ein Schwellenwert ist, der Straßenbestimmungsabschnitt (102) bestimmt, dass die Straßenform eine gerade Straße ist, und,
wenn der Lenkwinkel (θ) größer als der Schwellenwert ist, der Straßenbestimmungsabschnitt (102) bestimmt, dass die Straßenform eine gekrümmte Straße ist.

4. Vorrichtung (100) nach einem der vorhergehenden Ansprüche, bei der
ein Fahrzeugdetektor (101) dazu eingerichtet ist, ein Bild eines von einer Kameraeinrichtung erfassten vorderen Bereichs zu beziehen und das vordere Fahrzeug auf der Grundlage von Lampen des vorderen Fahrzeugs in dem aufgenommenen Bild zu erfassen.

## Revendications

1. Appareil de commande de répartition lumineuse (100) destiné à commander une courbe de répartition des intensités lumineuses qui est formée par la lumière émise par un phare de véhicule (RHL, LHL), le dispositif comprenant :
un détecteur de véhicule (101) conçu pour détecter un véhicule avant présent à l'avant du véhicule ;
un dispositif de commande de répartition lumineuse (103) conçu pour déterminer la courbe de répartition des intensités lumineuses, sur la base d'une position du véhicule avant détecté, de manière à éviter que le véhicule avant ne soit éclairé par une lumière éblouissante ;
un dispositif de commande de pivotement (104) conçu pour commander un pivotement du phare de véhicule ;
une section de détermination de route (102) conçue pour déterminer une forme de route d'une route à l'avant du véhicule, de manière à produire des informations concernant la route ; et
un dispositif de commande de réactivité (105) conçu pour régler une vitesse de commande de pivotement du dispositif de commande de pivotement (104) à une certaine vitesse, sur la base des informations concernant la route,
**caractérisé en ce que** :
lorsque la section de détermination de route (102) détermine que la route forme un virage, le dispositif de commande de réactivité (105) règle la vitesse de commande de pivotement du dispositif de commande de pivotement (104) à une première vitesse, et
lorsque la section de détermination de route (102) détermine que la route forme une ligne droite, le dispositif de commande de réactivité (105) règle la vitesse de commande de pivotement du dispositif de commande de pivotement (104) à une seconde vitesse,
dans lequel la première vitesse est supérieure à la seconde vitesse.

2. Dispositif (100) selon la revendication 1, dans lequel la section de détermination de route (102) est conçue pour déterminer la forme de la route sur la base d'un rayon de courbure de la route, et
dans lequel lorsque le rayon de courbure de la route est inférieur à une valeur de seuil, la section de détermination de route (102) détermine que la route forme une ligne droite, et
dans lequel lorsque le rayon de courbure de la route est supérieur à la valeur de seuil, la section de détermination de route (102) détermine que la route forme un virage.

3. Dispositif (100) selon la revendication 1, dans lequel la section de détermination de route (102) est conçue pour déterminer la forme de la route, sur la base d'un angle de braquage (θ) obtenu à partir d'un capteur d'angle de braquage (Sθ), et
dans lequel lorsque l'angle de braquage (θ) est inférieur à une valeur de seuil, la section de détermination de route (102) détermine que la route forme une ligne droite, et
dans lequel lorsque l'angle de braquage (θ) est supérieur à la valeur de seuil, la section de détermination de route (102) détermine que la route forme un virage.

4. Dispositif (100) selon l'une quelconque des revendications précédentes, dans lequel :
un détecteur de véhicule (101) est conçu pour obtenir une image d'une région avant capturée par un dispositif de prise de vues et pour détecter le véhicule avant sur la base de phares du véhicule avant sur l'image capturée.
